# EUROPEAN PATENT APPLICATION

(11) **EP 4 761 100 A1**
(43) Date of publication of application: **17.06.2026**
(21) Application number: 25220742.8
(22) Date of filing: 04.12.2025
(51) Int. Cl.: H02P 27/08, H02P 29/028

(54) **MULTIPLEXING CONTROL APPARATUS FOR MOTOR**

(30) Priority: 12.12.2024 JP 2024217500
(71) Applicant: Nabtesco Corporation, Tokyo 102-0093 (JP)
(72) Inventor: Jinno, Takayuki, Tokyo, 102-0093 (JP); Horikawa, Shogo, Tokyo, 102-0093 (JP); Ogawa, Takashi, Tokyo, 102-0093 (JP); Fukui, Atsushi, Tokyo, 102-0093 (JP)
(74) Representative: Grünecker Patent- und Rechtsanwälte PartG mbB

(57) **Abstract**

A multiplexing control apparatus (210) includes: three controllers (C) that output U-phase, V-phase, and W-phase analog voltage signals including U-phase, V-phase, and W-phase current command values for a motor (300), respectively; switches (SW1-SW3) provided for respective controllers (C) to switch the output lines to allow connection or disconnection; a U-phase intermediate value selection unit (211U) that receives U-phase output values of the switches (SW) and selects an intermediate value of the U-phase output values received; a V-phase intermediate value selection unit (211V) that receives V-phase output values of the switches (SW) and selects an intermediate value of the V-phase output values received; a W-phase intermediate value selection unit (211W) that receives W-phase output values of the switches (SW) and selects an intermediate value of the W-phase output values received; and a PWM output unit (212) that generates and outputs a PWM signal based on U-phase, V-phase, and W-phase intermediate values.

## Description

### BACKGROUND

The present invention relates to a multiplexing control technology for a motor.

The multiplexing control apparatus disclosed in patent literature 1 may be used to control various parts of aircraft such as a hydraulic actuator. The multiplexing control apparatus disclosed in patent literature 1 is equipped with three controllers. The same input signal is input to the three controllers, and the three controllers output the same output signal. The output signals of the three controllers are input to a majority circuit. The majority circuit determines an ultimate output by a majority decision on the inputs from the three controllers. In this way, the multiplexing controller disclosed in patent document 1 constitutes a multiplex redundancy processing circuit capable of obtaining a correct processing result as output data even if a failure occurs in some systems.

### [Patent Literature 1] JPH1-98034

It is desired to use a multiplexing control apparatus such as that of patent literature 1 to control the motor that drives the rotary blade part of a flight vehicle such as an electric vertical take-off and landing aircraft (hereinafter referred to as an eVTOL).

In this background, a general purpose of the present invention is to provide a technology of applying a multiplexing control apparatus to motor control.

A multiplexing control apparatus according to an embodiment of the present invention includes: three controllers that output U-phase, V-phase, and W-phase analog voltage signals including U-phase, V-phase, and W-phase current command values for a motor, respectively; output lines provided for respective controllers to transmit the U-phase, V-phase, and W-phase analog voltage signals output from the respective controllers; switches provided for respective controllers to switch the output lines to allow connection or disconnection; a U-phase intermediate value selection unit that receives U-phase output values of the switches via the output lines and selects a second largest intermediate value of the U-phase output values received; a V-phase intermediate value selection unit that receives V-phase output values of the switches via the output lines and selects a second largest intermediate value of the V-phase output values received; a W-phase intermediate value selection unit that receives W-phase output values of the switches via the output lines and selects a second largest intermediate value of the W-phase output values received; and a PWM output unit that generates and outputs a PWM signal based on U-phase, V-phase, and W-phase intermediate values.

Optional combinations of the aforementioned constituting elements, and implementations of the invention in the form of methods, apparatuses, systems, recording mediums, and computer programs may also be practiced as additional modes of the present invention.
Fig. 1 is a top view schematically showing eVTOL1 of the embodiment.
Fig. 2 shows a schematic configuration of the motor control apparatus of the embodiment.
Fig. 3 shows a schematic configuration of the first controller of the embodiment.
Fig. 4 shows a schematic configuration of the first switch of the embodiment.
Fig. 5 shows the status of the multiplexing control apparatus for each case.

The invention will now be described by reference to the preferred embodiments. This does not intend to limit the scope of the present invention, but to exemplify the invention.

### Embodiment

A description will now be given of an embodiment of a multiplexing control apparatus applied to flight vehicles such as eVTOL with reference to the drawing.

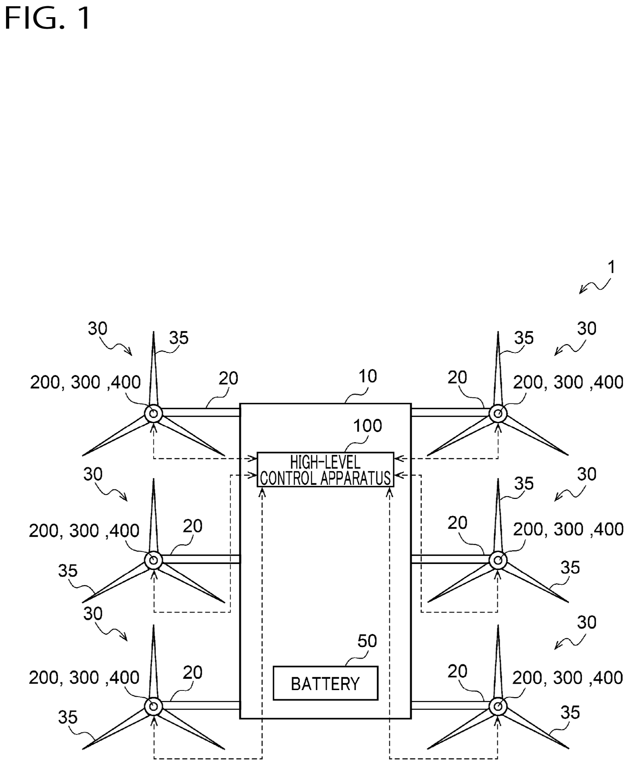

Fig. 1 is a top view schematically showing eVTOL1 of the embodiment. The eVTOL1 of the embodiment is configured as an unmanned aerial vehicle capable of taking off and landing in a vertical direction. eVTOL1 is equipped with a main unit 10 that makes up the fuselage part of the eVTOL 1, six arms 20, and six rotary blade parts 30. Each arm 20 supports the rotary blade part 30 provided in the arm. Each of the six rotary blade parts 30 is located at the end of the arm 20. Each rotary blade part 30 has three blades 35 arranged at equiangular intervals from each other. The eVTOL 1 of the embodiment is an example of a flight vehicle.

Each rotary blade part 30 includes a motor control apparatus 200, a motor 300, and a rotation detection sensor 400. The motor 300 is powered by a battery 50 and is driven into rotation. The motor 300 is, for example, a three-phase brushless motor. The motor control apparatus 200 controls the driving of the motor 300 based on a speed command from a high-level control apparatus 100. The rotation detection sensor 400 detects the rotation speed of the rotary blade part 30. The rotation detection sensor 400 of the embodiment detects the rotation speed of the rotor (not shown) of the motor 300 as the rotation speed of the rotary blade part 30, but the embodiment is not limited to. For example, the rotation speed of the blade 35 of the rotary blade part 30 may be detected. The result of detection by the rotation detection sensor 400 is output to the high-level control apparatus 100.

The main unit 10 houses the battery 50 and the high-level control apparatus 100. The battery 50 supplies power to the high-level control apparatus 100 as well as the motor control apparatus 200, the motor 300, the rotation detection sensor 400 provided in each rotary blade part 30, etc. The battery 50 is a rechargeable battery such as a lithium-ion battery that can be charged and discharged repeatedly.

The high-level control apparatus 100 performs various processes in the eVTOL1. The high-level control apparatus 100 is configured to communicate with the motor control apparatus 200 provided in each rotary blade part 30. The high-level control apparatus 100 outputs, to the motor control apparatus 200, a speed command for controlling the rotation speed of the rotary blade part 30 by controlling the motor 300. The speed command of the embodiment includes a command value for the rotation speed of the rotary blade part 30 (hereinafter referred to as a speed command value). The high-level control apparatus 100 generates, for example, the speed command value in the speed command in response to a user input via a user controller (not shown) for user manipulation of the eVTOL1.

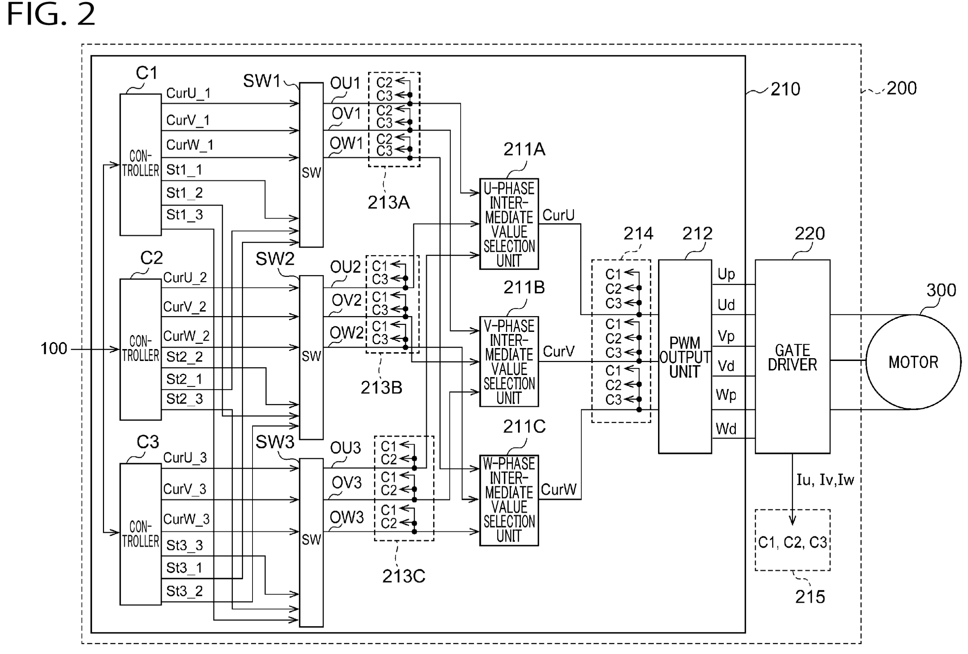

Fig. 2 shows a schematic configuration of the motor control apparatus 200 of the embodiment. As shown in Fig. 2, the motor control apparatus 200 is equipped with a multiplexing control apparatus 210 and a gate driver 220.

The multiplexing control apparatus 210 is equipped with first-third controllers C1-C3, first-third switches SW1-SW3, a U-phase intermediate value selection unit 211A, a V-phase intermediate value selection unit 211B, a W-phase intermediate value selection unit 211C, a PWM output unit 212, first-third U-phase output lines OU1-OU3, first-third V-phase output lines OV1-OV3, and first-third W-phase output lines OW1-OW3. It is assumed that the first-third controllers C1-C3 have basically the same configuration but are designed differently unless otherwise specified. It is also assumed that the first-third switches SW1-SW3 have basically the same configuration unless otherwise specified. In this specification, the controller may be generically referred to as a controller C in the case any of the first-third controllers C1-C3 is described in an unspecified manner. Further, the switch may be generically referred to as a switch SW in the case any of the first-third switches SW1-SW3 is described in an unspecified manner. Further, the intermediate value selection unit may be generically referred to as an intermediate value selection unit 211 in the case any of the U-phase intermediate value selection unit 211A, the V-phase intermediate value selection unit 211B, and the W-phase intermediate value selection unit 211C is described in an unspecified manner.

The first U-phase output line OU1, the first V-phase output line OV1, and the first W-phase output line OW1 connect the first controller C1 and the three-phase intermediate value selection unit 211. The second U-phase output line OU2, the second V-phase output line OV2, and the second W-phase output line OW2 connect the second controller C2 and the three-phase intermediate value selection unit 211. The third U-phase output line OU3, the third V-phase output line OV3, and the third W-phase output line OW3 connect the third controller C3 and the three-phase intermediate value selection unit 211.

The first controller C1 generates a three-phase analog voltage signal (hereinafter referred to as an analog voltage signal) indicating current command values CurU_1, CurV_1, CurW_1 of the U phase, V phase, and W phase for the motor 300 based on the speed command from the high-level control apparatus 100. The second controller C2 generates a three-phase analog voltage signal indicating the current command values CurU_2 CurV_2, CurW_2 of the respective phases for the motor 300 based on the speed command from the high-level control apparatus 100. The third controller C3 generates a three-phase analog voltage signal indicating the current command values CurU_3 CurV_3, CurW_3 of the respective phases for the motor 300 based on the speed command from the high-level control apparatus 100.

Further, the first controller C1 outputs status signals St1_1, St1_2, St1_3 to the first-third switches SW1-SW3, respectively. The second controller C2 outputs status signals St2_1, St2_2, St2_3 to the first-third switches SW1-SW3, respectively. The third controller C3 outputs status signals St3_1, St3_2, St3_3 to the first-third switches SW1-SW3, respectively. Hereinafter, the status signal may be generically referred to as a status signal St in the case any of the status signals St1_1, St1_2, St1_3, St2_1, St2_2, St2_3, St3_1, St3_2, St3_3 is described in an unspecified manner. The status signal St will be described later.

The first switch SW1 switches the first U-phase output line OU1, the first V-phase output line OV1, and the first W-phase output line OW1 to allow connection or disconnection. The first switch SW1 is turned on when the first controller C1 is normal (not malfunctioning) and supplies a three-phase analog voltage signal including the current command values CurU_1, CurV_1, CurW_1 from the first controller C1 to each intermediate value selection unit 211. The first switch SW1 is turned off when the first controller C1 malfunctions and cuts off the supply of the three-phase analog voltage signal including the current command values CurU_1, CurV_1, CurW_1 from the first controller C1 to each intermediate value selection unit 211. This causes the value of 0 to be input to each intermediate value selection unit 211 as the current command value of the first controller C1 in each phase.

The second switch SW2 switches the second U-phase output line OU2, the second V-phase output line OV2, and the second W-phase output line OW2 to allow connection or disconnection. The second switch SW2 is turned on when the second controller C2 is normal and supplies a three-phase analog voltage signal including the current command values CurU_2, CurV_ 2, CurW_2 from the second controller C2 to each intermediate value selection unit 211. The second switch SW2 is turned off when the second controller C2 malfunctions and cuts off the supply of the three-phase analog voltage signal including the current command values CurU_2, CurV_2, CurW_2 from the second controller C2 to each intermediate value selection unit 211. This causes the value of 0 to be input to each intermediate value selection unit 211 as the current command value of the second controller C2 in each phase.

The third switch SW3 switches the third U-phase output line OU3, the third V-phase output line OV3, and the third W-phase output line OW3 to allow connection or disconnection. The third switch SW3 is turned on when the third controller C3 is normal and supplies a three-phase analog voltage signal including the current command values CurU_3, CurV_3, CurW_3 from the third controller C3 to each intermediate value selection unit 211. The third switch SW3 is turned off when the third controller C3 malfunctions and cuts off the supply of the three-phase analog voltage signal including the current command values CurU_3, CurV_3, CurW_3 from the third controller C3 to each intermediate value selection unit 211. This causes the value of 0 to be input to each intermediate value selection unit 211 as the current command value of the third controller C3 in each phase.

The U-phase intermediate value selection unit 211A is connected to the first-third switches SW1-SW3 via the first-third U-phase output lines OU1-OU3, respectively. The U-phase intermediate value selection unit 211A receives the output values of the first-third switches SW1-SW3 for the U phase via the first-third U-phase output lines OU1-OU3.

The V-phase intermediate value selection unit 211B is connected to the first-third switches SW1-SW3 via the first-third V-phase output lines OV1-OV3, respectively. The V-phase intermediate value selection unit 211B receives the output values of the first-third switches SW1-SW3 for the V phase via the first-third V-phase output lines OV1-OV3.

The W-phase intermediate value selection unit 211C is connected to the first-third switches SW1-SW3 via the first-third W-phase output lines OW1-OW3, respectively. The W-phase intermediate value selection unit 211C receives the output values of the first-third switches SW1-SW3 for the W phase via the first-third W-phase output lines OW1-OW3.

The U-phase intermediate value selection unit 211A selects the intermediate value of the three values for the U-phase input from the first-third switches SW1-SW3, defines the selected value as the U-phase current target value CurU, and outputs an analog voltage signal including the U-phase current target value CurU to the PWM output unit 212. The V-phase intermediate value selection unit 211B selects the intermediate value of the three values for the V-phase input from the first-third switches SW1-SW3, defines the selected value as the V-phase current target value CurV, and outputs an analog voltage signal including the V-phase current target value CurV to the PWM output unit 212. The W-phase intermediate value selection unit 211C selects the intermediate value of the three values for the W-phase input from the first-third switches SW1-SW3, defines the selected value as the W-phase current target value CurW, and outputs an analog voltage signal including the W-phase current target value CurW to the PWM output unit 212. The intermediate value here refers to the second largest of the three values received by the intermediate value selection unnit 211. When the intermediate value selection unit 211 receives the value of 0, the value of 2, and the value of 3, for example, the second largest value, i.e., 2, is selected as the intermediate value. Further, when the intermediate value selection unit 211 receives the value of 0, the value of 0, and the value of 3, for example, the second largest value, i.e., 0 is selected as the intermediate value.

When the first-third controllers C1-C3 are all normal, for example, the U-phase intermediate value selection unit 211A receives a voltage signal including the three current command values CurU_1 CurU_2 and CurU_3. When the current command values are such that CurU _1>CurU_2>CurU_3, for example, the U-phase intermediate value selection unit 211A selects, as the intermediate value, the current command value CurU_2 from the current command values CurU_1 CurU_2, and CurU_3 and outputs CurU_2 to the PWM output unit 212. Similarly, the V-phase intermediate value selection unit 211B selects the intermediate value from the current command values CurV_1 CurV_2, and CurV_3 and outputs the selected value to the PWM output unit 212. Similarly, the W-phase intermediate value selection unit 211C selects the intermediate value from the current command values CurW 1, CurW_2, and CurW_3 and outputs the selected value to the PWM output unit 212.

Meanwhile, when, of the first-third controllers C1-C3, only the first controller C1 malfunctions, for example, the first switch SW1 is placed in an off status. The value of 0 is input as the current command value to the U-phase intermediate value selection unit 211A. In this case, the U-phase intermediate value selection unit 211A selects the intermediate value from the current command values 0, CurU_2, CurU_3. When the current command value CurU_3 is larger than the current command value CurU_2, for example, the U-phase intermediate value selection unit 211A selects the current command value CurU_2 as the intermediate value and outputs CurU_2 to the PWM output unit 212. Similarly, the V-phase intermediate value selection unit 211B selects the current command value CurV_2 or CurV_3 as the intermediate value and outputs CurV_2 or CurV_3 to the PWM output unit 212. Similarly, the W-phase intermediate value selection unit 211C selects the current command value CurW_2 or CurW_3 as the intermediate value and outputs CurW_2 or CurW_3 to the PWM output unit 212.

The PWM output unit 212 receives the respective analog voltage signals including the U-phase current target CurU, the V-phase current target CurV, and the W-phase current target CurW. The PWM output unit 212 generates and outputs PWM signals Up, Ud, Vp, Vd, Wp, Wp, Wd for driving respective switching elements (not shown) of a three-phase bridge circuit, based on the U-phase current target value CurU, the V-phase current target value CurV, and the W-phase current target value CurW and, for example, a carrier (carrier wave) that is a triangular wave carrier.

The gate driver 220 has a U-phase arm, a V-phase arm, and a W-phase arm each being comprised of two switching elements (not shown) connected in series. The coil of the corresponding phase in the motor 300 is connected between the two switching elements of the U, V, W phase arms of the gate driver 220. The gate driver 220 respectively generates currents Iu, IV and Iw of the U phase, the V phase and the W phase by a known method, based on the PWM signals Up and Ud, Vp and Vd, and Wp and Wd and outputs Iu, IV and Iw of the U phase, the V phase and the W phase to the motor 300 via the U phase arm, the V phase arm, and the W phase arm. The motor 300 is controlled by the U, V and W-phase currents Iu, IV and Iw of the gate driver 220. The switching element used in the gate driver 220 of the embodiment is IGBT, but the embodiment is not limited to. For example, FET may be used.

The multiplexing control apparatus 210 includes first-fourth detection units 213A-213C and 214. The first-third detection units 213A-213C detect the three-phase current command values output from the switch SW. For example, the first detection unit 213A detects the current command values on the first U-phase output line OU1, the first V-phase output line OV1, and the first W-phase output line OW1 and supplies the values to the second switch SW2 and the third switch SW3. For example, the second detection unit 213B detects the current command values on the second U-phase output line OU2, the second V-phase output line OV2, and the second W-phase output line OW2 and supplies the values to the first switch SW1 and the third switch SW3. For example, the third detection unit 213C detects the current command values on the third U-phase output line OU3, the third V-phase output line OV3, and the third W-phase output line OW3 and supplies the values to the first switch SW1 and the second switch SW2.

The fourth detection unit 214 detects the respective analog voltage signals including the three-phase currents Cur_U, Cur_V, and Cur_W output from the intermediate value selection unit 211 and outputs the analog voltage signals to the first-third controllers C1-C3.

Further, a fifth detection unit 215 is connected to the gate driver 220. The fifth detection unit 215 detects the three-phase currents Iu, IV, and Iw output from the gate driver 220 and outputs Iu, IV, and Iw to the first-third controllers C1-C3.

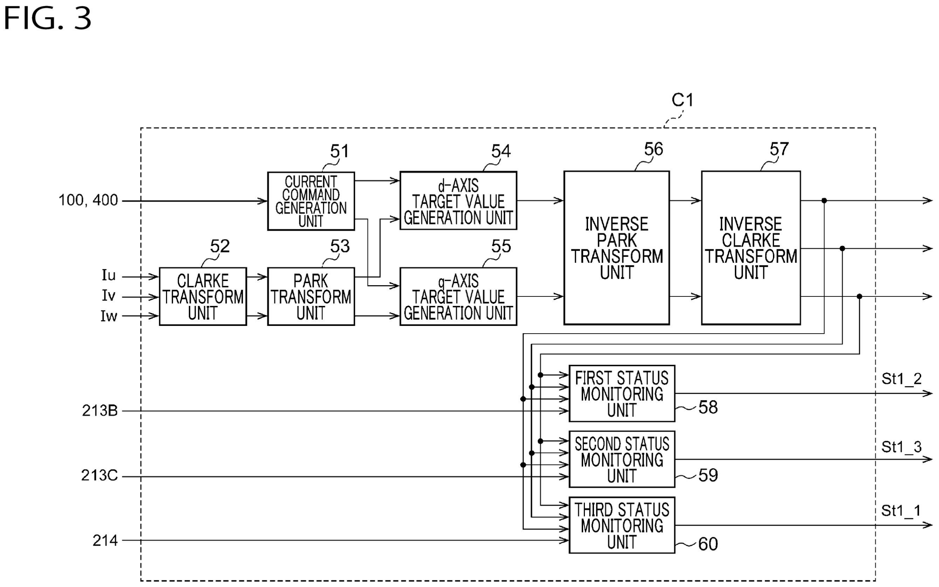

Fig. 3 shows a schematic configuration of the first controller C1 of the embodiment. The first controller C1 includes a current command generation unit 51, a Clarke transform unit 52, a Park transform unit 53, a d-axis target value generation unit 54, a q-axis target value generation unit 55, an inverse Park transform unit 56, an inverse Clarke transform unit 57, and first-third status monitoring units 58-60.

The current command generation unit 51 generates a d-axis current command value and a q-axis current command value to adapt to the speed command from the high-level control apparatus 100, based on a difference between the speed command input from the high-level control apparatus 100 and the rotation speed detected by a rotation detection sensor 33. The current command generation unit 51 outputs the d-axis current command value to the d-axis target value generation unit 54 and outputs the q-axis current command value to the q-axis target value generation unit 55.

The Clarke transform unit 52 calculates two-phase currents Iα, Iβ in the orthogonal coordinate (fixed coordinate) system (α, β) by subjecting the measurement values of the three-phase currents Iu, Iv, Iw generated by the fifth detection unit 215 to Clarke transform and outputs the calculated currents to the Park transform unit 53. The Park transform unit 53 calculates a q-axis detection value Iq and a d-axis detection value Id in the rotating coordinates from the two-phase currents Iα, Iβ in the fixed coordinate system by subjecting the currents Iα, Iβ to Park transform and outputs the detection values to the d-axis target value generation unit 54 and the q-axis target value generation unit 55.

The d-axis target value generation unit 54 sets a d-axis current target value based on the d-axis current command value output from the current command generation unit 51, the rotation speed output from the rotation detection sensor 33, and the d-axis detection value Id output from the Park transform unit 53. Further, the d-axis target value generation unit 54 computes the d-axis voltage target value at each predetermined period based on the d-axis current target value. For example, the d-axis target value generation unit 54 performs current feedback control such as proportional integral control (PI control) on the current deviation between the d-axis detection value Id and the d-axis current target value. As a result, the d-axis voltage target value is computed to bring the d-axis detection value Id closer to the d-axis current target value and is output to the inverse Park transform unit 56. The q-axis target value generation unit 55 similarly sets a q-axis current target value based on the q-axis current command value and the q-axis detection value Iq output from the Park transform unit 53, computes the q-axis voltage target value, and outputs the q-axis voltage target value thus computed to the inverse Park transform unit 56.

The inverse Park transform unit 56 calculates two-phase voltages Vα, Vβ in the fixed coordinate system from the rotating coordinates, by subjecting the d-axis voltage target value and the q-axis voltage target value to inverse Park transform. The inverse Clarke transform unit 57 generates a three-phase analog voltage signal including the current command values CurU_1, CurV_1, CurW_1 by subjecting the two-phase voltages Vα, Vβ in the fixed coordinate system to inverse Clarke transform. The inverse Clarke transform unit 57 outputs the three-phase analog voltage signal to the first switch SW1 and the first-third status monitoring unit 58-60.

The first status monitoring unit 58 receives the current command values CurU_1 CurV_1, CurW_1 included in the three-phase analog voltage signal generated by the inverse Clarke transform unit 57 and the result of detection by the second detection unit 213B. The first status monitoring unit 58 compares a difference between the three-phase current command values CurU_1, CurV_1, CurW_1 generated by the inverse Clarke transform unit 57 and the three-phase result of detection by the second detection unit 213B with a predetermined threshold value. When an error between this difference and the predetermined threshold value is smaller than a further predetermined threshold value for all three phases, for example, the first status monitoring unit 58 determines that the second controller C2 does not malfunction and outputs the value of 1 to the second switch SW2 as the status signal St1_2. When the error between this difference and the predetermined threshold value is equal to or larger than the further threshold for any of the three phases, for example, the first status monitoring unit 58 determines that the second controller C2 malfunctions and outputs the value of 0 to the second switch SW2 as the status signal St1_2. When the second controller C2 malfunctions and abnormal values are output as CurU_2, CurV_2, CurW_2 or when the second switch SW2 is cut off and the value of 0 is output from the second switch SW2, for example, the value of 0 is output as the status signal St1_2.

The second status monitoring unit 59 receives the current command values CurU_1, CurV_1, CurW_1 included in the three-phase analog voltage signal generated by the inverse Clarke transform unit 57 and the result of detection by the third detection unit 213C. The second status monitoring unit 59 compares a difference between the current command values CurU_1, CurV_1, CurW_1 included in the three-phase analog voltage signal generated by the inverse Clarke transform unit 57 and the three-phase result of detection by the third detection unit 213C with a predetermined threshold value. When an error between this difference and the predetermined threshold value is smaller than a further predetermined threshold value for all three phases, for example, the second status monitoring unit 59 determines that the third controller C3 does not malfunction and outputs the value of 1 to the third switch SW3 as the status signal St1_3. When the error between this difference and the predetermined threshold value is equal to or larger than the further threshold value for any of the three phases, for example, the second status monitoring unit 59 determines that the third controller C3 malfunctions and outputs the value of 0 to the third switch SW3 as the status signal St1_3. When the third controller C3 malfunctions and abnormal values are output as CurU_3, CurV_3, CurW_3 or when the third switch SW3 is cut off and the value of 0 is output from the third switch SW3, for example, the value of 0 is output as the status signal St1_3.

The third status monitoring unit 60 receives the current command values CurU_1, CurV_1, CurW_1 included in the three-phase analog voltage signal generated by the inverse Clarke transform unit 57 and the result of detection by the fourth detection unit 214. For example, the third status monitoring unit 60 compares a difference between the current command values CurU_1, CurV_1, CurW_1 included in the three-phase analog voltage signal generated by the inverse Clarke transform unit 57 and the three-phase result of detection by the fourth detection unit 214 with a predetermined threshold value. When an error between this difference and the predetermined threshold value is smaller than a further predetermined threshold value for all three phases, for example, the third status monitoring unit 60 determines that the first controller C1 does not malfunction and outputs the value of 1 to the first switch SW1 as the status signal St1_1. When the error between this difference and the predetermined threshold value is equal to or larger than the further threshold value for any of the three phases, for example, the third status monitoring unit 60 determines that the first controller C1 malfunctions and outputs the value of 0 to the first switch SW1 as the status signal St1_1. When the third controller C1 malfunctions and abnormal values are output as CurU_1, CurV_1, CurW_1 or when the first switch SW1 is cut off and the value of 0 is output from the first switch SW1, for example, the value of 0 is output as the status signal St1_1.

The second controller C2, like the first controller C1, similarly outputs status signals St2_1, St2_2, St2_3. For example, the first status monitoring unit 58 of the second controller C2 determines whether there is an abnormality in the first controller C1 based on the current command values CurU_2, CurV_2, CurW_2 included in the three-phase analog voltage signal generated by the inverse Clarke transform unit 57 and the result of detection by the first detection unit 213A and outputs the determination to the first switch SW1 in the form of the status signal St2_1 having the value of 0 or 1. Further, the second status monitoring unit 59 of the second controller C2, for example, determines whether there is an abnormality in the third controller C3 based on the current command values CurU_2, CurV_2, CurW_2 included in the three-phase analog voltage signal generated by the inverse Clarke transform unit 57 and the result of detection by the third detection unit 213C and outputs the determination to the third switch SW3 in the form of the status signal St2_3 having the value of 0 or 1. Further, the third status monitoring unit 60 of the second controller C2, for example, determines whether there is an abnormality in the second controller C2 based on the current command values CurU_2, CurV_2, CurW_2 included in the three-phase analog voltage signal generated by the inverse Clarke transform unit 57 and the result of detection by the fourth detection unit 214 and outputs the determination to the second switch SW2 in the form of the status signal St2_2 having the value of 0 or 1.

The third controller C3, like the first controller C1, similarly outputs status signals St3_1, St3_2, St3_3. For example, the first status monitoring unit 58 of the third controller C3 determines whether there is an abnormality in the first controller C1 based on the current command values CurU_2, CurV_2, CurW_2 included in the three-phase analog voltage signal generated by the inverse Clarke transform unit 57 and the result of detection by the first detection unit 213A and outputs the determination to the first switch SW1 in the form of the status signal St3_1 having the value of 0 or 1. Further, the second status monitoring unit 59 of the third controller C3, for example, determines whether there is an abnormality in the second controller C2 based on the current command values CurU_3, CurV_3, CurW_3 included in the three-phase analog voltage signal generated by the inverse Clarke transform unit 57 and the result of detection by the third detection unit 213C and outputs the determination to the second switch SW2 in the form of the status signal St3_2 having the value of 0 or 1. Further, the third status monitoring unit 60 of the third controller C3, for example, determines whether there is an abnormality in the third controller C3 based on the current command values CurU_3, CurV_3, CurW_3 included in the three-phase analog voltage signal generated by the inverse Clarke transform unit 57 and the result of detection by the fourth detection unit 214 and outputs the determination to the third switch SW3 in the form of the status signal St3_3 having the value of 0 or 1.

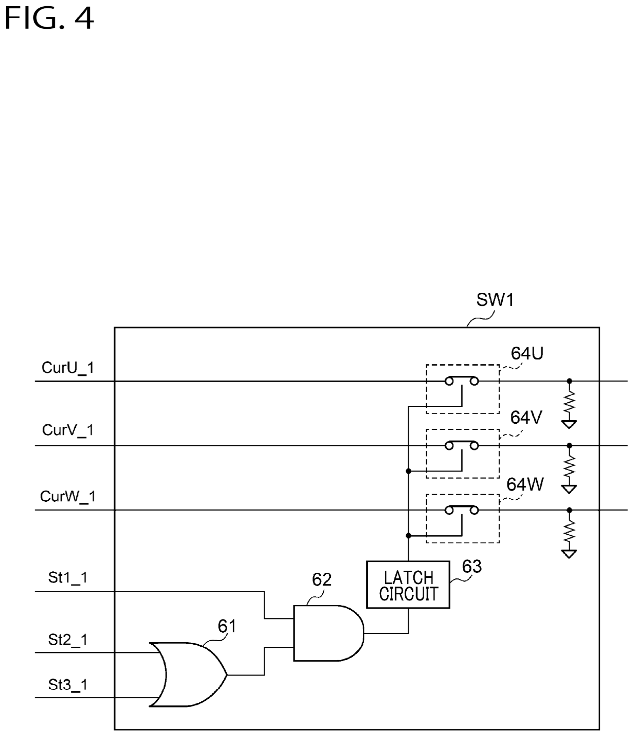

Fig. 4 shows a schematic configuration of the first switch SW1 of the embodiment. The first switch SW1 includes an OR circuit 61, an AND circuit 62, a latch circuit 63, and switching elements 64U-64W.

The OR circuit 61 receives the status signals St2_1 and St3_1 from the second controller C2 and the third controller C3, respectively. The OR circuit 61 outputs the value of 0 when both the input status signals St2_1 and St3_1 have the value of 0 (i.e., when both the second controller C2 and the third controller C3 determine that there is an abnormality in the first controller C1). Meanwhile, the OR circuit 61 outputs the value of 1 when at least one of the input status signals St2_1 or St3_1 has the value of 1 (i.e., when at least one of the second controller C2 or the third controller C3 determines that there is no abnormality in the first controller C1).

The AND circuit 62 receives the status signal St1_1 output from the first controller C1 and the output signal from the OR circuit 61. The AND circuit 62 outputs the value of 0 when either the input status signal St1_1 or the output signal from the OR circuit 61 has the value of 0. Meanwhile, the AND circuit 62 outputs the value of 1 when both the input status signal St1_1 and the output signal from the OR circuit 61 have the value of 1.

The latch circuit 63 receives the output signal of the AND circuit 62. The latch circuit 63 turns on the switching elements 64U-64W when the value of the output signal of the AND circuit 62 is 1. This causes CurU_1, CurV_1, CurW_1 to be output from the first switch SW1 and input to the intermediate value selection unit 211. Meanwhile, the latch circuit 63 turns off the switching elements 64U-64W when the value of the output signal of the AND circuit 62 is 0. This causes the value of 0 to be output from the first switch SW1 in each phase and input to the intermediate value selection unit 211. After the input of the latch circuit 63 transitions from 1 to 0 and the output transitions to 0, the output is fixed at 0 regardless of the input.

The second and third switches SW2 and SW3 also have the same configuration as the first switch SW1, except that the input signals are different. The OR circuit 61 of the second switch SW2 receives the status signals St1_2 and St3_2 from the first controller C1 and the third controller C3, respectively. The AND circuit 62 of the second switch SW2 receives the status signal St2_2 output from the second switch SW2 and the output signal from the OR circuit 61 of the second switch SW2. The latch circuit 63 of the second switch SW2 turns on the switching elements 64U-64W of the second switch SW2 when the value of the output signal of the AND circuit 62 of the second switch SW2 is 1 and turns off the switching elements 64U-64W of the second switch SW2 when the value of the output signal of the AND circuit 62 of the second switch SW2 is 0.

The OR circuit 61 of the third switch SW3 receives the status signals St1_3 and St2_3 from the first controller C1 and the second controller C2, respectively. The AND circuit 62 of the third switch SW3 receives the status signal St3_3 output from the third switch SW3 and the output signal from the OR circuit 61 of the third switch SW3. The latch circuit 63 of the third switch SW3 turns on the switching elements 64U-64W of the third switch SW3 when the value of the output signal of the AND circuit 62 of the third switch SW3 is 1 and turns off the switching elements 64U-64W of the third switch SW3 when the value of the output signal of the AND circuit 62 of the third switch SW3 is 0.

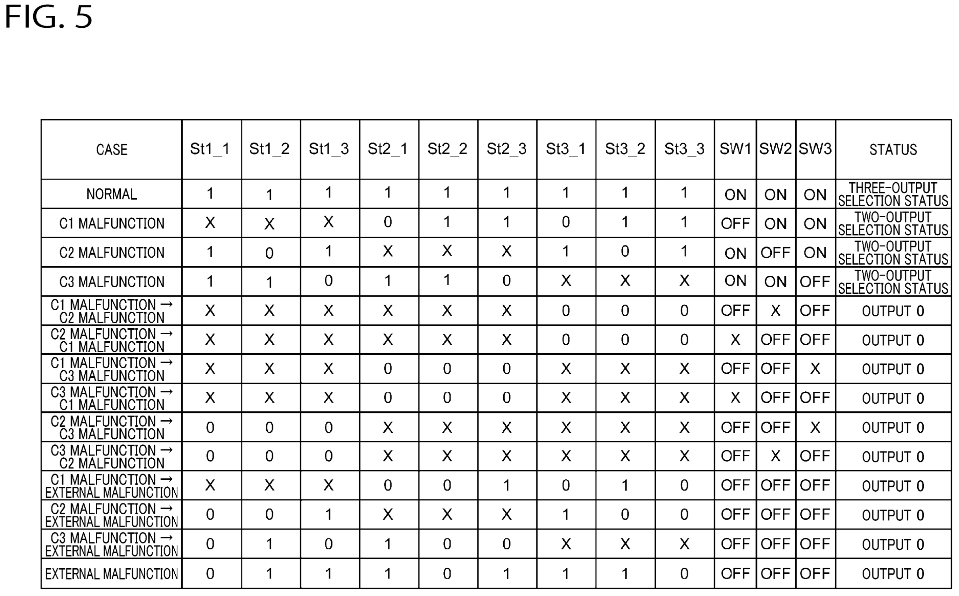

Fig. 5 shows the status of the multiplexing control apparatus 210 for each case. When all controllers C are in the normal status (case in Fig. 5: "normal"), for example, the status signals St all have the value of 1 indicating normal, and the switches SW are all turned on. As a result, the status of the intermediate value selection unit 211 will be a "three-output selection status" to select the intermediate value from the three current command values of the first-third controllers C1-C3.

For example, a description will be given of a case where the first-third controllers C1-C3 are in the normal status and then the first controller C1 malfunctions (case in Fig. 5: "C1 malfunction"). Since the first controller C1 malfunctions, the status signal St1_1 output from the first controller C1 is indefinite and can be 0 or 1. In Fig. 5, indefiniteness of the status signal St1_1 is indicated by "X". In the case of "C1 malfunction", the current command value output from the first controller C1 will be significantly different from the current command value output from the second and third controllers C2 and C3, respectively, and, of the current command values of the controllers C, the current command value of the first controller C1 will have the maximum value or the minimum value. As a result, the current command value of the first controller C1 will no longer be selected as the intermediate value by the intermediate value selection unit 211 of each phase. Further, since the current command value of the first controller C1 shows an abnormality, the status signals St2-1, St3-1 will have the value of 0 indicating an abnormality and the current command value of the first controller C1 is blocked by the first switch SW1 so that the value of 0 will be output from the first switch SW1. When the second-third controllers C2-C3 are in the normal status, the value of 0 output from the first switch SW1 will be the minimum value. Therefore, the status of the intermediate value selection unit 211 will be a "two-output selection status" to select the intermediate value from the two current command values of the two controllers C (in this case, the second and third controllers C2 and C3).

For example, a description will be given of a case where the second controller C2 malfunctions after the first controller C1 malfunctions (case in Fig. 5: "C1 malfunction ->C2 malfunction"). In this case, the first controller C1 malfunctions first so that the status signal St1_1 will be indefinite as in the case in Fig. 5: "C1 malfunction", and the value of 0 is output from the first switch SW1. Subsequently, the status signals St2_1, St2_2, St2_3 output from the second controller C2 will be indefinite. In the case of "C1 malfunction->C2 malfunction", therefore, the intermediate value selection unit 211 may select the current command value of the malfunctioning second controller C2 as the intermediate value. In this case, the current command value of the normal third controller C3 and the current target value of each phase as the intermediate value will be significantly different, and the status signal St3-3 will have the value of 0 indicating an abnormality, the third switch SW3 will be turned off, and the value of 0 will be output from the first switch SW1 and the third switch SW3. As a result, the intermediate value selection unit 211 will receive the value of 0, the current command value of the third controller C3, and the value of 0 and selects, of these three values, the value of 0 as the intermediate value. Therefore, the status of the intermediate value selection unit 211 will be an "output 0" status to output a signal having the value of 0. When the intermediate value selection unit 211 outputs the value of 0, the motor 300 stops.

For example, a description will be given of case of an external malfunction (case in Figure 5: "external malfunction"). An external malfunction refers to a case where a malfunction occurs in the motor control apparatus 200 other than those malfunctions occurring in the first-third controllers C1-C3 (except that a malfunction of the first-third switches SW1-SW3 is excluded from the malfunction shown in Fig. 5 although it is a malfunction that can be excluded by intermediate value selection). An external malfunction is detected by the detection apparatus of the first-third controllers C1-C3 as a malfunction related to the motor control apparatus 200 other than malfunctions occurring in the first-third controllers C1-C3 and the first-third switches SW1-SW3. The detection apparatus of the first-third controllers C1-C3 is inclusive of a general monitor for monitoring, for example, an overcurrent that is not subject to comparison by the first-third controllers C1-C3. When an external malfunction is detected, the first-third switches SW1-SW3 are turned off by setting the status signals St1-1, St2-2, St3-3 to 0, indicating an abnormality. Therefore, the status of the intermediate value selection unit 211 will be the "output 0" status to output a signal having the value of 0. When the intermediate value selection unit 211 outputs the value of 0, the motor 300 stops.

A multiplexing control apparatus 210 of the embodiment includes: three controllers C1-C3 that output U-phase, V-phase, and W-phase analog voltage signals including U-phase, V-phase, and W-phase current command values for a motor 300, respectively; output lines OU1-OU3, OV1-OV3, and OW1-OW3 provided for respective controllers C to transmit the U-phase, V-phase, and W-phase analog voltage signals output from the respective controllers C; switches SW1-SW3 provided for respective controllers C to switch the output lines OU1-OU3, OV1-OV3, and OW1-OW3 to allow connection or disconnection; a U-phase intermediate value selection unit 211U that receives U-phase output values of the switches SW1-SW3 via the output lines OU1-OU3 and selects a second largest intermediate value of the U-phase output values received; a V-phase intermediate value selection unit 211V that receives V-phase output values of the switches SW1-SW3 via the output lines OV1-OV3 and selects a second largest intermediate value of the V-phase output values received; a W-phase intermediate value selection unit 211W that receives W-phase output values of the switches SW1-SW3 via the output lines OW1-OW3 and selects a second largest intermediate value of the W-phase output values received; and a PWM output unit 212 that generates and outputs a PWM signal based on U-phase, V-phase, and W-phase intermediate values. Assuming that a digital signal is output from each controller, the intermediate value selection unit 211 would compare the digital signals from the controllers C. However, it would be difficult to compare the digital signals by extracting the duty ratio of the digital signals according to proper synchronization timing. It may therefore be impossible to select the intermediate value properly for each of the U, V, and W phases in this case. Further, trying to compare digital signals properly leads to circuit complexity. According to the configuration of the embodiment, on the other hand, the intermediate value is selected by comparing the analog voltage signals output from the respective controllers C. Therefore, the intermediate value can be selected properly for each of the U, V, and W phases. Therefore, it is possible to apply the multiplexing control apparatus 210 to motor control with a simple configuration. Further, even if one of the three controller Cs malfunctions, the intermediate value is selected from the three controllers C, including the controller C that malfunctions, so that the motor 300 is prevented from being temporarily stopped.

In the multiplexing control apparatus 210 of the embodiment, a given controller C includes: a first status monitoring unit 58 that generates, based on a comparison between each of the U-phase, V-phase, and W-phase current command values generated by the given controller C and each of the U-phase, V-phase, and W-phase output values of the switch SW provided for a further controller C, a first status signal indicating whether the further controller malfunctions; a second status monitoring unit 59 that generates, based on a comparison between each of the U-phase, V-phase, and W-phase current command values generated by the given controller C and each of the U-phase, V-phase, and W-phase output values of the switch SW provided for a still further controller C, a second status signal indicating whether the still further controller malfunctions; and a third status monitoring unit 60 that generates a third status signal indicating whether the given controller C malfunctions based on a comparison between each of the U-phase, V-phase, and W-phase current command values generated by the given controller C and results of selection by the U-phase intermediate value selection unit 211U, the V-phase intermediate value selection unit 211V, and the W-phase intermediate value selection unit 211W, wherein each switch SW cuts off the output line connected to the controller C that malfunctions based on the first status signal, the second status signal, and the third status signal output from the controllers C. According to this configuration, the supply of an analog voltage signal to the intermediate value selection unit 211 by the malfunctioning controller C can be blocked so that the selection, by the intermediate value selection unit 211, of the analog voltage signal of the malfunctioning controller C as the intermediate value is suppressed. Further, the output line connected to the malfunctioning controller C is cut off so that the motor 300 can be inhibited from running out of control in the event that two controllers C malfunction.

In the multiplexing control apparatus 210 of the embodiment, each switch SW includes: an OR circuit 61 that outputs a signal indicating that the controller C does not malfunction when at least one of the first status signal or the second status signal input to the OR circuit 61 indicates that the controller C does not malfunction and otherwise outputs a signal indicating that the controller C malfunctions; an AND circuit 62 that outputs a signal indicating that the controller C malfunctions when at least one of the third status signal or a signal output from the OR circuit 61 indicates that the controller C malfunctions and otherwise outputs a signal indicating that the controller C does not malfunction; and a latch circuit that cuts off the output line when the signal indicating that the controller C malfunctions is output from the AND circuit 62. According to this configuration, it is possible to cut off the output line properly by the switch SW based on the status signal.

The embodiment shows an example of applying the multiplexing control apparatus 210 to the motor 300 of eVTOL1, but the embodiment is not limited to this. The multiplexing control apparatus 210 of the embodiment is applicable to various motors.

As explained above, redundant PWM control of a motor in a multiplexed system with fewer transients (temporary changes) occurring at the time of switching the output line can be performed by importing the status of a further line different from a given line outputting UVW control signals, providing a SW that disconnects the line connected thereto in the event of an abnormality, and selecting the intermediate value of the rest of multiplexed control signals of the UVW phases.

Described above is an explanation based on the embodiment. The embodiment is intended to be illustrative only and it will be understood by those skilled in the art that various modifications to combinations of constituting elements and processes are possible and that such modifications are also within the scope of the present invention.

The function and the configuration of each apparatus explained in the embodiment can be realized by hardware resources or software resources or cooperation between hardware resources and software resources. As the hardware resources, processors, ROMs, RAMs, or other LSIs can be employed. Programs such as operating systems and applications can be used as software resources.

Of the embodiments disclosed in this specification, those in which a plurality of functions are provided in a distributed manner may be provided by aggregating some or all of the plurality of functions. Conversely, a plurality of functions provided in an aggregated manner may be provided by distributing some of all of the plurality of functions. Regardless of whether functions are aggregated or distributed, they may be configured so as to achieve the purpose of the invention.

## Claims

1. A multiplexing control apparatus (210) comprising:
three controllers (C) that output U-phase, V-phase, and W-phase analog voltage signals including U-phase, V-phase, and W-phase current command values for a motor, respectively;
output lines provided for respective controllers (C) to transmit the U-phase, V-phase, and W-phase analog voltage signals output from the respective controllers (C);
switches (SW1-SW3) provided for respective controllers (C) to switch the output lines to allow connection or disconnection;
a U-phase intermediate value selection unit (211U) that receives U-phase output values of the switches (SW) via the output lines and selects a second largest intermediate value of the U-phase output values received;
a V-phase intermediate value selection unit (211V) that receives V-phase output values of the switches (SW) via the output lines and selects a second largest intermediate value of the V-phase output values received;
a W-phase intermediate value selection unit (211W) that receives W-phase output values of the switches (SW) via the output lines and selects a second largest intermediate value of the W-phase output values received; and
a PWM output unit that generates and outputs a PWM signal based on U-phase, V-phase, and W-phase intermediate values.

2. The multiplexing control apparatus (210) according to claim 1,
wherein a given controller (C) includes:
a first status monitoring unit (58) that generates, based on a comparison between each of the U-phase, V-phase, and W-phase current command values generated by the given controller (C) and each of the U-phase, V-phase, and W-phase output values of the switch (SW) provided for a further controller (C), a first status signal indicating whether the further controller (C) malfunctions;
a second status monitoring unit (59) that generates, based on a comparison between each of the U-phase, V-phase, and W-phase current command values generated by the given controller (C) and each of the U-phase, V-phase, and W-phase output values of the switch (SW) provided for a still further controller (C), a second status signal indicating whether the still further controller (C) malfunctions; and
a third status monitoring unit (60) that generates a third status signal indicating whether the given controller (C) malfunctions based on a comparison between each of the U-phase, V-phase, and W-phase current command values generated by the given controller (C) and results of selection by the U-phase intermediate value selection unit (211U), the V-phase intermediate value selection unit (211V), and the W-phase intermediate value selection unit (211W),
wherein each switch (SW) cuts off the output line connected to the controller (C) that malfunctions based on the first status signal, the second status signal, and the third status signal output from the controllers (C).

3. The multiplexing control apparatus (210) according to claim 2,
wherein each switch (SW) includes:
an OR circuit (61) that outputs a signal indicating that the controller (C) does not malfunction when at least one of the first status signal or the second status signal input to the OR circuit (61) indicates that the controller (C) does not malfunction and otherwise outputs a signal indicating that the controller (C) malfunctions;
an AND circuit (62) that outputs a signal indicating that the controller (C) malfunctions when at least one of the third status signal or a signal output from the OR circuit (61) indicates that the controller (C) malfunctions and otherwise outputs a signal indicating that the controller (C) does not malfunction; and
a latch circuit (63) that cuts off the output line when the signal indicating that the controller (C) malfunctions is output from the AND circuit (62).
